# EUROPEAN PATENT APPLICATION

(11) **EP 4 316 714 A1**
(43) Date of publication of application: **07.02.2024**
(21) Application number: 22780385.5
(22) Date of filing: 23.03.2022
(51) Int. Cl.: B23H 7/02, B23H 7/20

(54) **PROCESSING-CONDITION ESTIMATION DEVICE**

(30) Priority: 29.03.2021 JP 2021055156
(71) Applicant: FANUC CORPORATION, Oshino-mura Minamitsuru-gun Yamanashi 401-0597 (JP)
(72) Inventor: HADA, Keita, Yamanashi 401-0597 (JP)
(74) Representative: Haseltine Lake Kempner LLP
(86) International application number: PCT/JP2022/013554
(87) International publication number: WO 2022/210170

(57) **Abstract**

A machining condition estimation device includes a machining information database that stores machining information data in which data related to a machining condition satisfying a machining content and a required specification are associated with data related to the machining content and data related to the required specification. A machining condition estimated to satisfy a desired machining content and the required specification is derived based on the machining information data stored in the machining information database, and a simulation of a wire electric discharge machine is executed based on the derived machining condition. The machining condition is evaluated based on an execution result of the simulation, and the machining information database is updated based on a result of the evaluation.

## Description

### Technical Field

The present invention relates to a machining condition estimation device, particularly a machining condition estimation device that searches for a machining condition of a wire electric discharge machine.

### Background Art

When machining is performed by a wire electric discharge machine, machining is performed by using machining conditions (voltage waveform, voltage polarity, current waveform, discharge time, pause time, machining fluid amount, machining fluid pressure, wire tension, wire feed control, and the like) prepared in accordance with machining contents (workpiece material, workpiece thickness, machining shape, step of workpiece, and surrounding environment, and the like) and required specifications (machining speed, wire breakage frequency, straightness accuracy, surface roughness, shape error, and the like). A manufacturer performs actual machining many times while changing the machining conditions of the wire electric discharge machine, searches for machining conditions considered to be appropriate for each combination of machining contents and required specifications, and generates a machining condition list. Such a search operation for machining conditions needs to be performed by a skilled worker over time. A user selects and uses a machining condition satisfying desired machining contents and required specifications from the machining condition list prepared in advance by the manufacturer.

As a technique related to a search for a machining condition in the related art, for example, Patent Literature 1 discloses a technique in which a relationship between a set machining condition and a machining result at the time of actual machining is stored in a database, and a machining condition satisfying required specifications is predicted by machine learning based on the generated database. In the technique of Patent Literature 1, machining is actually performed under predicted machining conditions, a database is updated by a result obtained from the machining, and machining conditions to be tried next are repeatedly predicted and presented. As a result, it is possible to find more appropriate machining conditions faster than by manual operation of the worker.

### Citation List

### Patent Literature

Patent Literature 1: WO 2020/255370 A1

### Summary of Invention

### Technical Problem

There are enormous combinations of machining contents and required specifications described above. Therefore, it is difficult to cover appropriate machining conditions for combinations of machining contents and required specifications in all machining. At present, manufacturers search for machining conditions by limiting to commonly used machining contents and required specifications. For special machining contents and required specifications outside the machining condition list, it is necessary to compromise deterioration of machining performance and use similar machining conditions in the machining condition list or to request the manufacturers to search for machining conditions by special request. Under such circumstances, the manufacturers are required to incorporate as many combinations of machining contents and required specifications as possible into the machining condition list. In the search work of the machining conditions, it is necessary to perform actual machining while changing the machining conditions according to the machining contents and required specifications. Since manual work is required for actual machining and evaluation of machining results, it is also difficult to perform full automation.

For this reason, there is a demand for a technique that enables a search operation for a machining condition to be performed without manpower as much as possible.

### Solution to Problem

A machining condition estimation device according to the present invention solves the above problem by using a simulation technique for evaluating a machining condition predicted by a search when searching for the machining condition. By using the simulation technique, it is possible to evaluate machining conditions without performing actual machining, and it is possible to acquire more data in a shorter period of time than performing actual machining.

Also, according to an aspect of the present invention, a machining condition estimation device that estimates a machining condition in a wire electric discharge machine includes a machining information database that stores machining information data in which data related to a machining condition satisfying a machining content and a required specification are associated with data related to the machining content and data related to the required specification, a machining condition derivation unit that derives at least one machining condition estimated to satisfy a desired machining content and required specification based on the machining information data stored in the machining information database, a simulation unit that executes a simulation of a wire electric discharge machine based on the machining condition derived by the machining condition derivation unit, a machining condition evaluation unit that evaluates the machining condition based on a result of the simulation by the simulation unit, and a database update unit that updates the machining information database based on a result of an evaluation by the machining condition evaluation unit.

### Advantageous Effects of Invention

According to one aspect of the present invention, when a machining condition that satisfies machining contents and required specifications input from an operator is searched, the machining condition can be evaluated without actual machining by using a simulation technique for evaluating the machining condition predicted by the search.

### Brief Description of Drawings

Fig. 1 is a schematic hardware configuration diagram of a controller according to a first embodiment.
Fig. 2 is a schematic block diagram illustrating functions of the controller according to the first embodiment.
Fig. 3 is a diagram illustrating an example of machining information data stored in a machining information database.
Fig. 4 is a schematic hardware configuration diagram of a controller according to a second embodiment.
Fig. 5 is a schematic block diagram illustrating functions of the controller according to the second embodiment.

### Description of Embodiments

Hereinafter, embodiments of the present invention are described with reference to the drawings.

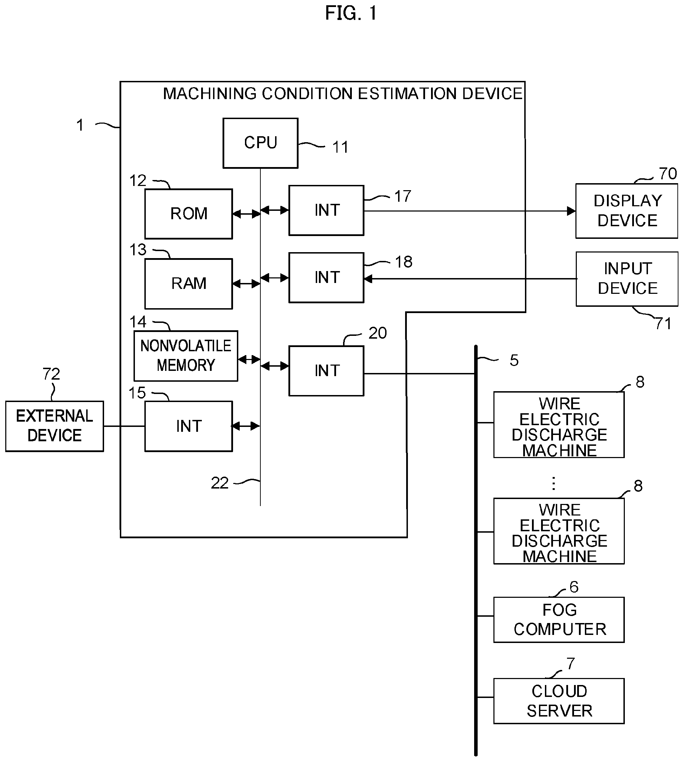

Fig. 1 is a schematic hardware configuration diagram illustrating a main part of a machining condition estimation device according to a first embodiment of the present invention.

The machining condition estimation device 1 of the present invention can be implemented as, for example, a controller that controls a wire electric discharge machine 8, can be implemented as a personal computer provided side by side with the controller, and can also be implemented as a computer such as a fog computer 6 and a cloud server 7. The machining condition estimation device 1 according to the present embodiment is implemented as a computer connected to (a controller that controls) the wire electric discharge machine 8 via a wired/wireless network 5.

A CPU 11 included in the machining condition estimation device 1 according to the present embodiment is a processor that controls the machining condition estimation device 1 as a whole. The CPU 11 reads a system program stored in a ROM 12 via a bus 22 and controls the entire machining condition estimation device 1 according to the system program. A RAM 13 temporarily stores temporary calculation data, display data, various data input from the outside, and the like.

A nonvolatile memory 14 includes, for example, a memory or a solid state drive (SSD) that is backed up by a battery (not illustrated), and a storage state is maintained even when the machining condition estimation device 1 is powered off. The nonvolatile memory 14 stores programs and data read from an external device 72 via an interface 15, programs and data input from an input device 71 via an interface 18, programs and data acquired from other devices such as the fog computer 6 and the cloud server 7 via the network 5, and the like. The data stored in the nonvolatile memory 14 may include, for example, data related to a machining content in the wire electric discharge machine 8, data related to required specifications, and data related to each physical quantity detected by a sensor (not illustrated) attached to the wire electric discharge machine 8. The programs and data stored in the nonvolatile memory 14 may be loaded in the RAM 13 at the time of execution/use. In the ROM 12, various system programs such as a known analysis program are written in advance.

The interface 15 is an interface for connecting the CPU 11 of the machining condition estimation device 1 to an external device 72 such as an external storage medium. For example, programs, data, and the like used for simulation are read from the external device 72 side. The program, data, and the like edited in the machining condition estimation device 1 can be stored in an external storage medium (not illustrated) such as a CF card or a USB memory via the external device 72.

An interface 20 is an interface for connecting the CPU of the machining condition estimation device 1 and the wired or wireless network 5. The network 5 may perform communication by using technologies such as serial communication such as RS-485, Ethernet (registered trademark) communication, optical communication, wireless LAN, Wi-Fi (registered trademark), and Bluetooth (registered trademark). The network 5 is connected to a controller that controls other machines and a higher-level management device such as the fog computer 6 and the cloud server 7 and exchanges data with the machining condition estimation device 1.

On a display device 70, each data read on the memory, data obtained as a result of execution of a program or the like, and the like are output and displayed via an interface 17. In addition, the input device 71 including a keyboard, a pointing device, and the like passes commands, data, and the like based on a work by a worker to the CPU 11 via the interface 18.

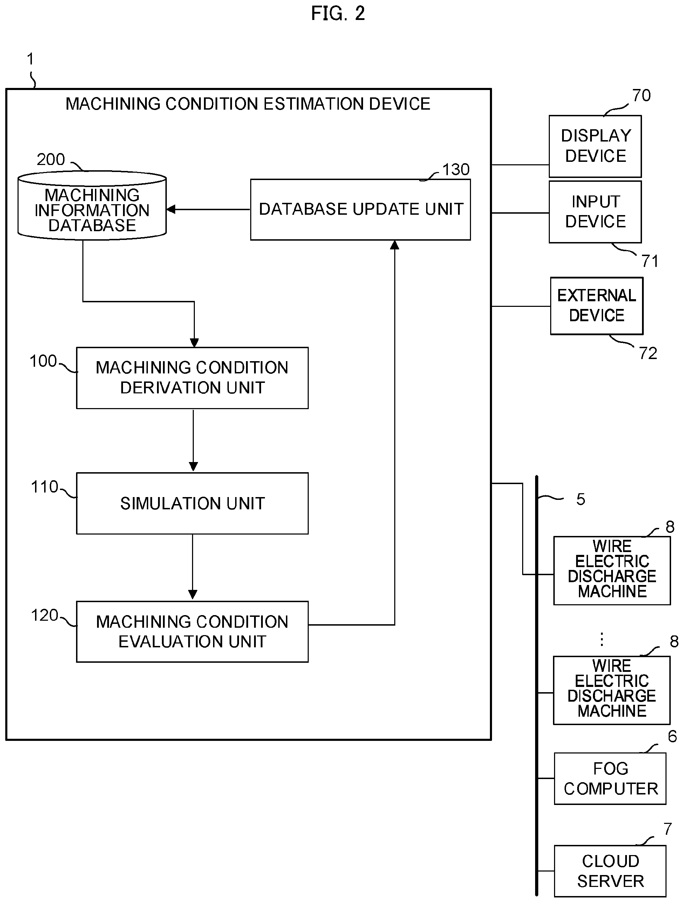

Fig. 2 is a schematic block diagram illustrating functions of the machining condition estimation device 1 according to the first embodiment of the present invention.

The functions of the machining condition estimation device 1 according to the present embodiment are implemented by the CPU 11 included in the machining condition estimation device 1 illustrated in Fig. 1 executing a system program and controlling the operation of each unit of the machining condition estimation device 1.

The machining condition estimation device 1 according to the present embodiment includes a machining condition derivation unit 100, a simulation unit 110, a machining condition evaluation unit 120, and a database update unit 130. In addition, the RAM 13 to the nonvolatile memory 14 of the machining condition estimation device 1 are provided with a machining information database 200 which is an area for storing machining information data in which data related to a machining condition is associated with data related to predetermined machining contents and data related to required specifications.

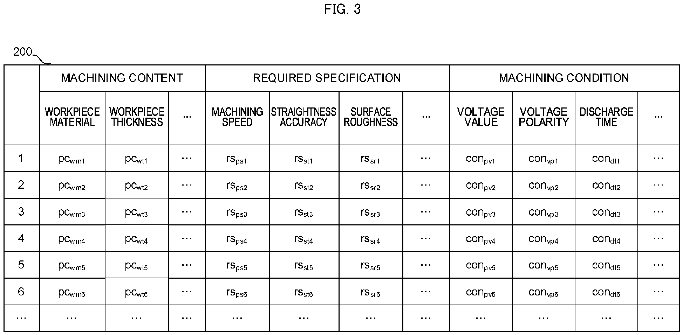

Fig. 3 illustrates an example of machining information data stored in the machining information database 200.

As illustrated in Fig. 3, the machining information database 200 stores data related to machining conditions for satisfying the machining contents and the required specifications in association with the data related to the machining contents and the data related to the required specifications. The data related to the machining content includes data such as a workpiece material, a workpiece thickness, a machining shape, a step of workpiece, and a surrounding environment, the data related to the required specifications includes data such as a machining speed, a wire breakage frequency, straightness accuracy, surface roughness, and a shape error, and the data related to the machining conditions includes data such as a voltage waveform, a voltage polarity, a current waveform, a discharge time, a pause time, a machining fluid amount, a machining fluid pressure, a wire tension, and wire feed control. Each machining information data is associated with identification information for uniquely identifying the machining information data.

The machining information data stored in the machining information database 200 at the initial stage may be, for example, data input by an operator via the input device 71 or the external device 72 or may be data obtained by acquiring data observed in machining performed in the past in the wire electric discharge machine 8. The data to be stored in the machining information database 200 at the initial stage does not need to comprehensively cover all machining contents and required specifications.

The machining condition derivation unit 100 is implemented by execution of the system program read from the ROM 12 by the CPU 11 included in the machining condition estimation device 1 illustrated in Fig. 1 and mainly performing arithmetic processing using the RAM 13 and the nonvolatile memory 14 by the CPU 11. The machining condition derivation unit 100 derives a predetermined machining condition estimated to satisfy the machining content and the required specifications based on the data related to the machining content and the data related to the required specifications input from the operator.

The machining condition derivation unit 100 may derive a predetermined machining condition estimated to satisfy the machining content and the required specifications input from the operator based on the machining information data stored in the machining information database 200. In this case, the machining condition derivation unit 100 performs similarity search between the data related to the machining content and the data related to the required specifications input from the operator, and the data related to the machining content and the data related to the required specifications included in each piece of machining information data stored in the machining information database 200. In the similarity search, for example, a distance in a case where each of the data related to the machining content and the data related to the required specifications are regarded as vectors is calculated, and the data having the shortest distance is extracted as machining information data having high similarity. Then, a plurality of machining conditions obtained by adding a predetermined change to the machining conditions included in the extracted machining information data are derived as predetermined machining conditions estimated to satisfy the machining contents and the required specifications.

When the data to be changed is a numerical value, the machining condition derivation unit 100 may change the data, for example, by adding a predetermined variable. The predetermined variable may be a plurality of variables. The machining conditions derived by the machining condition derivation unit 100 are used as parameters for the simulation operation of the wire electric discharge machine by the simulation unit 110. Basically, in the simulation, it is also possible to set a machining condition with which actual machining can not be performed due to the specifications of the actual machine. Therefore, the change applied to the data by the machining condition derivation unit 100 may exceed the range of a general set value or the range of a combination.

As an example, the machining condition derivation unit 100 may derive a predetermined machining condition estimated to satisfy the machining content and the required specifications by adding a predetermined change determined in advance for each condition item to data related to the machining condition included in the machining information data extracted from the machining information database 200. This may be a machining condition in which a change is added for each condition item or a combination of machining conditions in which changes are added for each condition item.

In order to simplify the description, it is assumed that there are two condition items of a voltage value and a discharge time as machining conditions. In addition, it is assumed that a voltage value of ±0.1 V and a discharge time of ±1 usec are defined as predetermined changes in advance. At this time, the machining condition derivation unit 100 derives the machining condition by adding the following 8 changes to the machining information data extracted from the machining information database 200.
(Machining Condition 1) Voltage Value of +0.1 V
(Machining Condition 2) Voltage Value of -0.1 V
(Machining Condition 3) Discharge Time of +1 usec
(Machining Condition 4) Discharge Time of -1 usec
(Machining Condition 5) Voltage Value of +0.1 V and Discharge Time of +1 usec
(Machining Condition 6) Voltage Value of +0.1 V and Discharge Time of -1 usec
(Machining Condition 7) Voltage Value of -0.1 V and Discharge Time of +1 usec
(Machining Condition 8) Voltage Value of -0.1 V and Discharge Time of -1 µsec

Furthermore, in addition to the predetermined change, a machining condition in which a change is added to the machining condition by further using a random number may be derived. Such a change in the machining conditions can be used to derive machining conditions out of mechanical specifications or machining conditions not assumed by a person.

The machining conditions derived by the machining condition derivation unit 100 are for simulating machining conditions that are not covered by the machining information database 200. Therefore, the machining condition derived by the machining condition derivation unit 100 is desirably not the machining information data including the machining condition already stored in the machining information database 200. When the machining information data to which the predetermined change is added is the same as that already stored in the machining information database 200, the machining condition derivation unit 100 may exclude the corresponding machining condition from the output target.

The simulation unit 110 is implemented by execution of the system program read from the ROM 12 by the CPU 11 included in the machining condition estimation device 1 illustrated in Fig. 1 and mainly performing arithmetic processing using the RAM 13 and the nonvolatile memory 14 by the CPU 11. The simulation unit 110 performs simulation of the wire electric discharge machine based on the machining conditions derived by the machining condition derivation unit 100 and outputs a machining result. The simulation unit 110 sets data that can be set as parameters of the simulation operation among the machining conditions derived by the machining condition derivation unit 100, the data related to the machining content and the data related to the required specifications input from the operator, and then executes simulation processing of the wire electric discharge machine. For the simulation of the wire electric discharge machine performed by the simulation unit 110, for example, known methods disclosed in "JP 2002-160127 A", "Kunieda Masanori, "Simulation of Electrical Discharge Machining", Journal of The Japan Society for Precision Engineering, Vol. 76, No. 8, 2010, pp. 861 to 866", or the like may be used.

The simulation unit 110 outputs the machining speed, the wire breakage frequency, the straightness accuracy, the surface roughness, the shape error, and the like as a result of the simulation of the wire electric discharge machine with the set parameters.

The machining condition evaluation unit 120 is implemented by execution of the system program read from the ROM 12 by the CPU 11 included in the machining condition estimation device 1 illustrated in Fig. 1 and mainly performing arithmetic processing using the RAM 13 and the nonvolatile memory 14 by the CPU 11. The machining condition evaluation unit 120 evaluates to what extent the result of the simulation based on each machining condition derived by the machining condition derivation unit 100 satisfies the data related to the required specifications input from the operator. For example, the machining condition evaluation unit 120 may score each item so as to have a high score when the result is good and a low score when the result is bad, such as 1 when the shape error of the simulation result is smaller than the shape error input from the operator, 0.5 when the shape error is less than 2 times, and 0 when the shape error is 2 times or more and evaluate the total value. The scoring may be weighted according to the importance of each item. The machining condition evaluation unit 120 outputs each machining condition and the evaluation thereof. The evaluation result by the machining condition evaluation unit 120 may be displayed and output on the display device 70 or may be transmitted and output to a host device such as the fog computer 6 or the cloud server 7 via the network 5.

The database update unit 130 is implemented by execution of the system program read from the ROM 12 by the CPU 11 included in the machining condition estimation device 1 illustrated in Fig. 1 and mainly performing arithmetic processing using the RAM 13 and the nonvolatile memory 14 by the CPU 11. The database update unit 130 updates the machining information database based on the machining conditions and the evaluation thereof output by the machining condition evaluation unit 120. For example, the database update unit 130 may generate the machining information data in association with the machining content input by the operator and the required specification item as the simulation result by the simulation unit for the machining condition that has been most highly evaluated by the machining condition evaluation unit 120 and store the machining information data in the machining information database 200. In addition, the database update unit 130 may generate, for example, machining information data for machining conditions to which the machining condition evaluation unit 120 has assigned a predetermined evaluation point or higher and store the machining information data in the machining information database 200. Furthermore, the database update unit 130 may generate machining information data for a machining condition selected by the operator among the machining conditions displayed on the display device and store the machining information data in the machining information database 200.

As a modification of the machining condition estimation device 1 according to the present embodiment, the machining condition evaluation unit 120 may instruct the machining condition derivation unit 100 to derive a further machining condition when a predetermined evaluation or higher is not obtained for each machining condition, for example, when an evaluation point equal to or higher than a predetermined threshold is not obtained. Upon receiving such a command, the machining condition derivation unit 100 further derives a machining condition in which a predetermined change is superimposed a plurality of times or derives a machining condition to which a further change by a random number is added. In this manner, the simulation unit 110 may perform a simulation of the wire electric discharge machine based on the newly derived machining condition and may continue to search for a machining condition under which a predetermined evaluation or more is obtained.

When a machining condition that satisfies machining contents and required specifications input from an operator is searched, the machining condition estimation device 1 according to the present embodiment having the configuration described above can evaluate the machining condition without actual machining by using a simulation technique for evaluating the machining condition predicted by the search. Since it is not necessary to perform actual machining, it is possible to reduce manual work related to actual machining. In addition, by making the calculation resource used for the simulation fast, it is possible to acquire more data in a much shorter period of time than performing actual machining. In the simulation, it is also possible to evaluate a machining condition with which actual machining can not be performed due to the specifications of the actual machine. Therefore, since it is also possible to perform simulation on machining conditions for which a range or combination is not assumed, it is possible to evaluate machining conditions outside machine specifications or machining conditions that cannot be conceived by a worker or the like, and this can be a guideline for specification improvement and new research and development of machines.

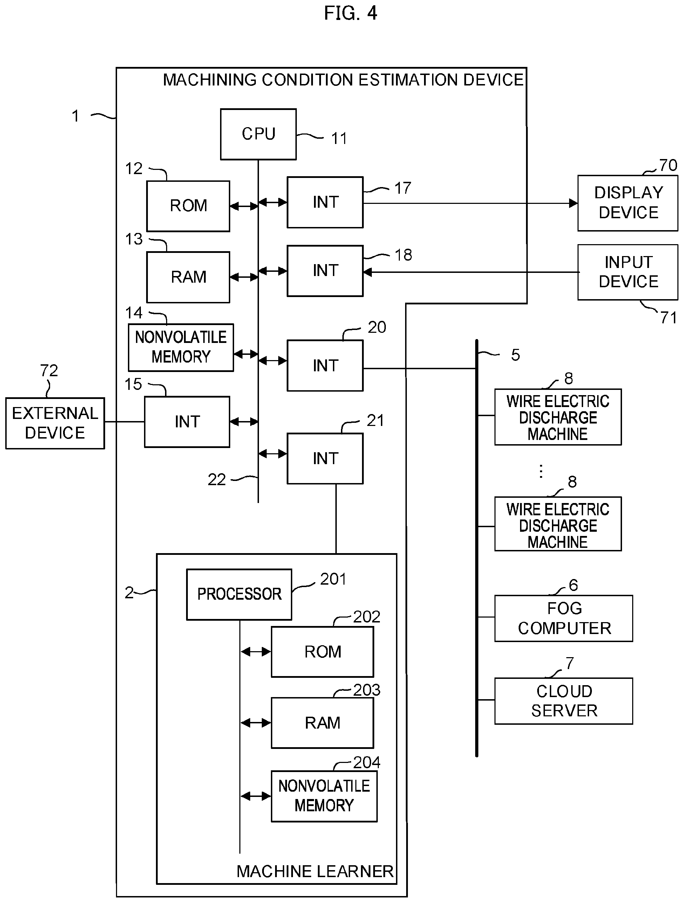

Fig. 4 is a schematic hardware configuration diagram illustrating a main part of a machining condition estimation device according to a second embodiment of the present invention. The machining condition estimation device 1 according to the present embodiment uses a machine learner 2 to estimate the machining condition.

The machining condition estimation device 1 according to the present embodiment includes an interface 21 and the machine learner 2 in addition to the configuration included in the machining condition estimation device 1 (Fig. 2) according to the first embodiment.

The interface 21 is an interface for connecting the CPU 11 and the machine learner 2. The machine learner 2 includes a processor 201 that controls the entire machine learner 2, a ROM 202 that stores a system program and the like, a RAM 203 that performs temporary storage in each process related to machine learning, and a nonvolatile memory 204 used for storage of a model or the like that has learned a data group to be learned. The machine learner 2 can observe data (for example, data related to machining contents, data related to required specifications, data related to machining conditions, and the like) generated by the machining condition estimation device 1 via the interface 21. In addition, the machining condition estimation device 1 acquires a processing result output from the machine learner 2 via the interface 21 and stores the acquired result, displays the acquired result, or transmits the acquired result to another device via the network 5 or the like. The machine learner 2 is built in the machining condition estimation device 1 in Fig. 1 but may be externally connected to the machining condition estimation device 1 via a predetermined interface.

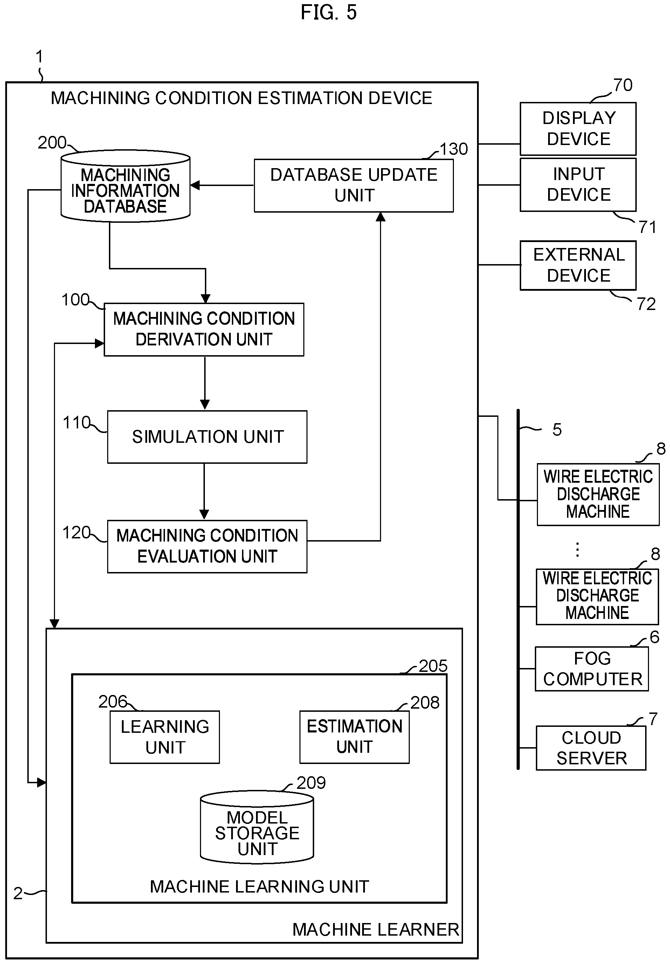

Fig. 5 is a schematic block diagram illustrating functions of the machining condition estimation device 1 according to the second embodiment of the present invention.

The functions of the machining condition estimation device 1 according to the present embodiment are implemented by causing the CPU 11 included in the machining condition estimation device 1 illustrated in Fig. 4 and the processor 201 included in the machine learner 2 to execute system programs and control the operations of the respective units of the machining condition estimation device 1 and the machine learner 2.

The machining condition estimation device 1 of the present embodiment includes a machine learning unit 205 configured on the machine learner 2 in addition to the machining condition derivation unit 100, the simulation unit 110, the machining condition evaluation unit 120, and the database update unit 130. In addition, the RAM 13 to the nonvolatile memory 14 of the machining condition estimation device 1 are provided with a machining information database 200 which is an area for storing machining information data in which data related to a machining condition is associated with data related to predetermined machining contents and data related to required specifications. Furthermore, in the RAM 203 to the nonvolatile memory 204 of the machine learner 2, a model storage unit 209 is prepared in advance as an area for storing a model generated as a result of learning by a learning unit 206.

The machine learning unit 205 according to the present embodiment is implemented by causing the processor 201 included in the machine learner 2 illustrated in Fig. 4 to execute a system program read from the ROM 202 and causing the processor 201 mainly to perform arithmetic processing using the RAM 203 and the nonvolatile memory 204. The machine learning unit 205 performs processing (learning, estimation, and the like) related to machine learning based on a command from each function of the machining condition estimation device 1.

The learning unit 206 included in the machine learning unit 205 generates a model that has learned the correlation between the data related to the machining content and the data related to the required specifications and the data related to the machining conditions based on the machining information data stored in the machining information database 200 and stores the generated model in the model storage unit 209. The learning performed by the learning unit 206 may be, for example, known supervised learning. When data related to a machining content and data related to a required specification are input by performing machine learning, the model generated by the learning unit 206 can estimate data related to a machining condition that satisfies the machining content and the required specification. Examples of the model generated by the learning unit 206 include a regression learner, a multilayer neural network, and the like.

An estimation unit 208 included in the machine learning unit 205 executes estimation processing of a machining condition using the model stored in the model storage unit 209 based on the data related to the machining content and the data related to the required specifications input from the machining condition derivation unit 100. The estimation processing performed by the estimation unit 208 may be estimation processing by known supervised learning or reinforcement learning.

Also, similarly to the machining condition derivation unit 100 according to the first embodiment (Fig. 2), the machining condition derivation unit 100 derives a predetermined machining condition estimated to satisfy the machining content and the required specifications based on the data related to the machining content and the data related to the required specifications input from the operator. The machining condition derivation unit 100 according to the present embodiment derives a predetermined machining condition based on the machining information data stored in the machining information database 200, similarly to the machining condition derivation unit 100 according to the first embodiment, at a stage where the learning of the model by the learning unit 206 is not sufficient. On the other hand, at the stage where the learning of the model by the learning unit 206 becomes sufficient, the machining condition derivation unit 100 inputs the data related to the machining content and the data related to the required specifications input from the operator to the machine learning unit 205 and acquires a predetermined machining condition estimated to satisfy the machining content and the required specifications input from the operator. Then, a plurality of machining conditions obtained by adding a predetermined change to the estimated machining conditions are derived as predetermined machining conditions estimated to satisfy the machining contents and the required specifications.

Whether the learning of the model by the learning unit 206 is sufficient may be determined by the number of pieces of machining information data stored in the machining information database 200. For example, the machining condition derivation unit 100 may request the machine learning unit 205 to estimate the machining condition when the number of pieces of machining information data stored in the machining information database 200 is equal to or larger than a predetermined threshold value.

When a machining condition that satisfies machining contents and required specifications input from an operator is searched, the machining condition estimation device 1 according to the present embodiment having the configuration described above can evaluate the machining condition without actual machining by using a simulation technique for evaluating the machining condition predicted by the search. By estimating the machining condition serving as the reference of the search by machine learning, it can be expected that the calculation amount of the simulation processing related to the search is greatly reduced as the estimation accuracy by the machine learner is improved.

Although one embodiment of the present invention has been described above, the present invention is not limited to only the example of the embodiment described above and can be implemented in various aspects by adding appropriate changes.

### Reference Signs List

- 1: machining condition estimation device
- 5: network
- 6: fog computer
- 7: cloud server
- 8: wire electric discharge machine
- 11: CPU
- 12: ROM
- 13: RAM
- 14: nonvolatile memory
- 15, 17, 18, 20, 21: interface
- 22: bus
- 70: display device
- 71: input device
- 72: external device
- 100: machining condition derivation unit
- 110: simulation unit
- 120: machining condition evaluation unit
- 130: database update unit
- 2: machine learner
- 201: processor
- 202: ROM
- 203: RAM
- 204: nonvolatile memory
- 205: machine learning unit
- 206: learning unit
- 208: estimation unit
- 209: model storage unit

## Claims

1. A machining condition estimation device that estimates a machining condition in a wire electric discharge machine, the machining condition estimation device comprising:
a machining information database that stores machining information data in which data related to a machining condition satisfying a machining content and a required specification are associated with data related to the machining content and data related to the required specification;
a machining condition derivation unit that derives at least one machining condition estimated to satisfy a desired machining content and the required specification based on the machining information data stored in the machining information database;
a simulation unit that executes a simulation of a wire electric discharge machine based on the machining condition derived by the machining condition derivation unit;
a machining condition evaluation unit that evaluates the machining condition based on a result of the simulation by the simulation unit; and
a database update unit that updates the machining information database based on a result of an evaluation by the machining condition evaluation unit.

2. The machining condition estimation device according to claim 1, further comprising:
a machine learning unit that learns a correlation between the data related to the machining content and the data related to the required specification and the data related to the machining condition, based on the machining information data stored in the machining information database,
wherein the machining condition derivation unit derives at least one machining condition estimated to satisfy the desired machining content and required specifications based on a learning result by the machine learning unit.
